# EUROPEAN PATENT APPLICATION

(11) **EP 0 788 927 A2**
(43) Date of publication of application: **13.08.1997**
(21) Application number: 97101764.5
(22) Date of filing: 05.02.1997
(51) Int. Cl.: B60Q 1/44

(54) **Apparatus and system for providing an alert signal indicative of deceleration of a vehicle**

(30) Priority: 09.02.1996 SG 9601271
(71) Applicant: MOTOROLA, INC., Schaumburg, IL 60196 (US)
(72) Inventor: Chua, Chee Seong, Singapore 618648 (SG); Han, Boon Kwang, Singapore 53022 (SG); Foon, Wee Hin, Singapore 520307 (SG)
(74) Representative: Hudson, Peter David

(57) **Abstract**

An apparatus (100) and system (200) for providing an alert signal indicative of deceleration of a vehicle having a speed signal processor (120) for processing a speed signal, deceleration detector (140) for detecting deceleration of the vehicle, and alert signal generator (160) for generating the alert signal. Upon receiving a reference signal from the speed signal processor (120) and a deceleration signal from the deceleration detector (140), the alert signal generator (160) then generates the alert signal. The reference signal is generated after processing the speed signal relative to a speed threshold value.

## Description

### Field of the Invention

This invention relates to an apparatus and system for providing an alert signal indicative of deceleration of a vehicle.

### Background of the Invention

Road vehicles typically have alert systems for activating lights, mounted on their rear, to indicate when they are braking or slowing down. Such systems enable a vehicle, when braking or slowing down, to visually alert other vehicles and thereby reduce the possibility of accidents.

Conventional alert systems are controlled by a switch activated by the brake pedal of the vehicle. In such conventional alert systems, a delay occurs between release of the accelerator pedal to slow down or brake and stepping on the brake pedal. This delay is critical during situations when a faster indication of the braking can reduce the possibility of accidents, such as when the vehicle is moving at high speeds and is trailed closely by other vehicles. In this regard, U.S. Patents 3,659,268, 5,210,522, and 5,309,141 provide examples of how the delay in the conventional alert systems is eliminated with improvements that indicate braking or slowing down upon release of the accelerator pedal.

However, such improvements to the conventional alert systems tend to indicate braking or deceleration too frequently, regardless of the vehicle's speed. As a result, drivers of trailing vehicles are de-sensitized or they become indifferent to indications of the braking or deceleration. Consequently, such drivers may not react in time to situations that require emergency braking.

### Summary of the Invention

It is an object of this invention is to overcome or at least alleviate at least one of the problems associated with providing an alert signal indicative of deceleration of a vehicle.

According to one aspect of the invention, there is provided an apparatus for providing an alert signal indicative of deceleration of a vehicle, the apparatus comprising:
speed signal processing means for processing a speed signal indicative of vehicle speed to generate a reference signal relative to a speed threshold value;
deceleration detecting means for detecting the deceleration to provide a deceleration signal; and
alert signal generating means, coupled to both the speed signal processing means and the deceleration detecting means, wherein the alert signal generating means is adapted to generate the alert signal depending on both the reference signal and the deceleration signal.

Preferably, the speed threshold value of the speed signal processing means is related to vehicle speeds when above sixty kilometers an hour.

The deceleration detecting means may include motion detecting means.

Alternatively, the deceleration detecting means may be a motion detector.

Preferably, the alert signal generating means may include a visual display means for displaying the alert signal.

Suitably, the visual display means may be at least one light emitting device.

The alert signal generating means may be adapted to be coupled to brake lights of the vehicle.

Alternatively, the alert signal generating means may be coupled to at least one light of the vehicle.

According to another aspect of the invention, there is provided a system for providing an alert signal indicative of deceleration of a vehicle, the system comprising:
speed monitoring means for providing a speed signal indicative of vehicle speed;
speed signal processing means for processing the speed signal to generate a reference signal relative to a speed threshold value;
deceleration detecting means for detecting the deceleration to provide a deceleration signal; and
alert signal generating means, coupled to both the speed signal processing means and the deceleration detecting means, wherein the alert signal generating means is adapted to generate the alert signal depending on both the reference signal and the deceleration signal.

The speed monitoring means may include a speedometer.

Preferably, the speed threshold value of the speed signal processing means is related to vehicle speeds above sixty kilometers an hour.

The deceleration detecting means may be activatable by a brake pedal or an accelerator pedal of the vehicle.

Alternatively, the deceleration detecting means may be a motion detector.

Preferably the alert signal generating means may include a visual display means for displaying the alert signal.

Suitably, the visual display means may be at least one light emitting device.

The alert signal generating means may be adapted to be coupled to brake lights of the vehicle.

### Brief Description of the Drawings

In order to describe the invention and to put it into practical effect, reference will now be made to a preferred embodiment as illustrated with reference to the accompanying figures in which:
FIG. 1 illustrates a schematic block diagram of an apparatus in accordance with a preferred embodiment of the present invention.
FIG. 2 illustrates a block diagram of a system in accordance with the preferred embodiment of the present invention.

### Detailed Description of the Invention

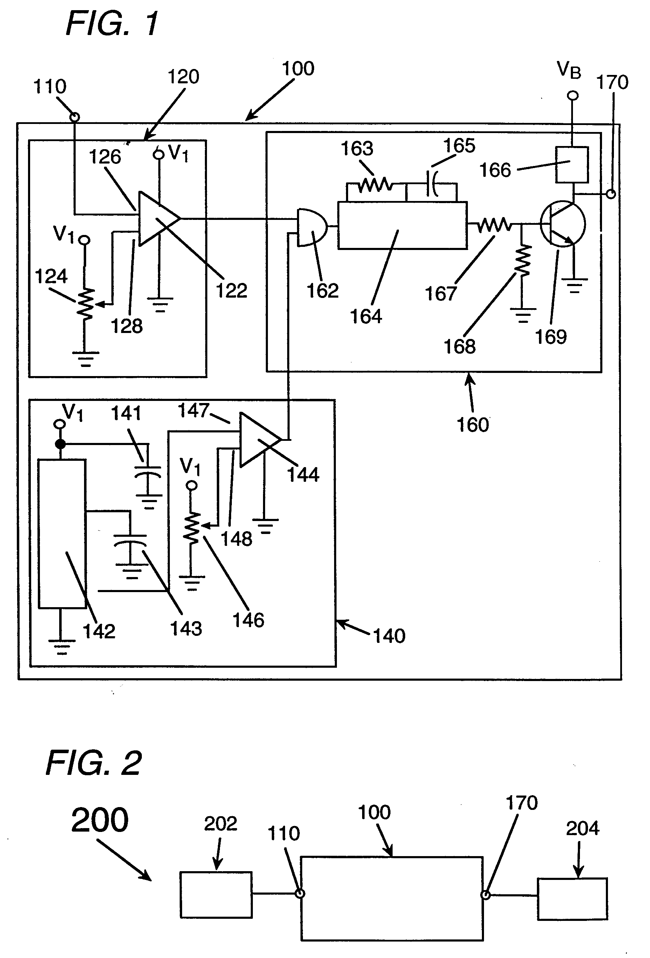

In accordance with a preferred embodiment of the present invention, FIG. 1 illustrates a schematic block diagram of an apparatus 100 for providing an alert signal indicative of deceleration of a vehicle. The apparatus 100 comprises speed signal processing means 120, deceleration detecting means 140, and alert signal generating means 160. The alert signal generating means 160 couples to both the speed signal processing means 120 and the deceleration detecting means 140 to provide the alert signal.

An input port 110 receives a speed signal, indicative of vehicle speed and represented as a voltage, to a first input 126 of a first comparator 122 within the speed signal processing means 120. At a second input 128 of the first comparator 122, a reference voltage for a speed threshold value is set with a first variable resistor 124. Based on a comparison of the reference voltage of the speed threshold value with the voltage of the speed signal, a reference signal is generated by the first comparator 122 to the alert signal generating means 160.

As applied in the present invention, the speed threshold value advantageously sets a specified speed above which the reference signal is generated by the speed signal processing means 120. For example, the speed threshold value can be set at sixty kilometers per hour so that the reference signal is generated whenever the vehicle travels at speeds above sixty kilometers per hour. Hence, drivers of vehicles trailing the vehicle having the apparatus 100 are not subjected to unnecessary indication of the vehicle's deceleration at speeds less than sixty kilometers per hour.

Referring again to FIG. 1, the deceleration detecting means 140 comprises a motion detector 142, a second variable resistor 146, and a second comparator 144. The deceleration detecting means 140 detects the deceleration to provide a deceleration signal to the alert signal generating means 160. Magnitude of the deceleration, provided as a voltage to a first input 147 of the second comparator 144, is referenced against a reference voltage at a second input 148 of the second comparator 144. The reference voltage at the second input 148 is set by the second variable resistor 146.

The alert signal generating means 160 in FIG. 1 comprises an AND-gate 162 and a monostable multivibrator 164 coupled to visual display means 166 for displaying the alert signal. Coupling to both the speed signal processing means 120 and the deceleration detecting means 140, the AND-gate 162 receives the reference signal and the deceleration signal. Upon receiving both the reference signal and the deceleration signal, the AND-gate 162 provides an enabling signal to the monostable multivibrator 164. Receiving the enabling signal, the monostable multivibrator 164 activates the visual display means 166 to generate the alert signal. Additionally, by using a signal port 170, the alert signal generating means 160 may be adapted to be coupled to the vehicle's brake lights instead of the visual display means 166.

In coupling the speed signal processing means 120 and the deceleration detecting means 140, the alert signal generating means 160 of the present invention advantageously restricts generation of the alert signal to indicate braking or deceleration occurring after the vehicle travels above a specified speed. Hence, the apparatus 100 of the present invention reduces driver desensitization by indicating the braking or deceleration with the visual display means 166 or the vehicle's brake lights only at vehicle speeds above the specified speed.

Referring now to FIG. 2, a system 200 incorporating the apparatus 100 is illustrated in accordance with the preferred embodiment of the present invention. The system 200 comprises speed monitoring means 202 coupled to the input port 110 and brake lights 204 coupled to the signal port 170. In this system 200, the brake lights 204 are activated by the alert signal only when braking occurs when the vehicle travels above the specified speed.

Therefore, the apparatus 100 and the system 200 overcome or at least alleviate at least one of the problems associated with conventional alert systems. By having the apparatus 100 and the system 200 indicate braking or slowing down only after the vehicle travels above the specified speed, as determined by the speed threshold value, drivers of trailing vehicles will not be de-sensitized or become indifferent to frequent indications of braking or slowing down commonly associated with the conventional alert systems.

## Claims

1. An apparatus for providing an alert signal indicative of deceleration of a vehicle, the apparatus comprising:
speed signal processing means for processing a speed signal indicative of vehicle speed to generate a reference signal relative to a speed threshold value;
deceleration detecting means for detecting the deceleration to provide a deceleration signal; and
alert signal generating means coupled to both the speed signal processing means and the deceleration detecting means, wherein the alert signal generating means is adapted to generate the alert signal depending on both the reference signal and the deceleration signal.

2. The apparatus as claimed in Claim 1 wherein the alert signal generating means comprises a visual display means for displaying the alert signal.

3. The apparatus as claimed in Claim 2 wherein the visual display means comprises at least one light emitting device.

4. The apparatus as claimed in Claim 1 wherein the alert signal generating means couples to at least one light of the vehicle.

5. The apparatus as claimed in Claim 1 wherein the deceleration detecting means comprises a motion detector.

6. A system for providing an alert signal indicative of deceleration of a vehicle, the system comprising:
speed monitoring means for providing a speed signal indicative of vehicle speed;
speed signal processing means for processing the speed signal to generate a reference signal relative to a speed threshold value;
deceleration detecting means for detecting the deceleration to provide a deceleration signal; and
alert signal generating means, coupled to both the speed signal processing means and the deceleration detecting means, wherein the alert signal generating means is adapted to generate the alert signal depending on both the reference signal and the deceleration signal.

7. The system as claimed in Claim 6 wherein the alert signal generating means comprises a visual display means for displaying the alert signal.

8. An apparatus for providing an alert signal indicative of deceleration of a vehicle substantially as described herein with reference to and as illustrated by the accompanying drawings.

9. A system for providing an alert signal indicative of deceleration of a vehicle substantially as described herein with reference to and as illustrated by the accompanying drawings.
